# EUROPÄISCHE PATENTSCHRIFT

(11) **EP 0 918 927 B1**
(45) Veröffentlichungstag und Bekanntmachung des Hinweises auf die Patenterteilung: **06.03.2002**
(21) Anmeldenummer: 97930321.1
(22) Anmeldetag: 14.06.1997
(51) Int. Cl.: F02M 61/08, F02M 61/16, B05B 1/08

(54) **EINSPRITZVENTIL, INSBESONDERE ZUM DIREKTEN EINSPRITZEN VON KRAFTSTOFF IN EINEN BRENNRAUM EINES VERBRENNUNGSMOTORS**
INJECTION VALVE, PARTICULARLY FOR DIRECT INJECTION OF FUEL INTO THE COMBUSTION CHAMBER OF AN INTERNAL COMBUSTION ENGINE
SOUPAPE D'INJECTION, NOTAMMENT POUR INJECTER DU CARBURANT DIRECTEMENT DANS LA CHAMBRE DE COMBUSTION D'UN MOTEUR A COMBUSTION INTERNE

(30) Priorität: 17.08.1996 DE 19633260
(43) Veröffentlichungstag der Anmeldung: 02.06.1999
(73) Patentinhaber: ROBERT BOSCH GMBH, 70442 Stuttgart (DE)
(72) Erfinder: REMBOLD, Helmut, D-70435 Stuttgart (DE); MÜLLER, Martin, D-71696 Möglingen (DE); PREUSSNER, Christian, D-71706 Markgröningen (DE)
(86) Internationale Anmeldenummer: DE9701213
(87) Internationale Veröffentlichungsnummer: WO9807980

(56) Entgegenhaltungen:
- EP-A- 0 045 530
- WO-A-96/29514
- DE-A- 3 201 044
- DE-A- 3 210 209
- DE-A- 3 820 509
- GB-A- 2 093 118
- US-A- 2 656 218

## Beschreibung

Die Erfindung betrifft ein Einspritzventil, insbesondere zum direkten Einspritzen von Kraftstoff in einen Brennraum eines Verbrennungsmotors, nach dem Oberbegriff des Anspruchs 1.

### STAND DER TECHNIK

Ein derartiges bekanntes Einspritzventil (WO 93/23 172) zum direkten Einspritzen von Kraftstoff in den Brennraum eines Verbrennungsmotors umfaßt einen in einem Gehäuse angeordneten Ventilkörper mit einer Ventilöffnung, die von einem abspritzseitig angeordneten Ventilsitz umgeben ist und durch die sich eine einen Schließkopf tragende Ventilnadel so hindurch erstreckt, daß der Schließkopf bei geschlossenem Ventil von außen am Ventilsitz anliegt.

Wird die Ventilnadel zum Abspritzen von Kraftstoff gegen die Kraft einer Schließfeder aus ihrer Schließstellung in Abspritzrichtung bewegt, so hebt der Schließkopf vom Ventilsitz ab und bildet eine ringspaltförmige Abspritzöffnung zwischen Schließkopf und Ventilsitz. Der Querschnitt der Abspritzöffnung ist dabei der engste, die Durchflußmenge bestimmende Querschnitt des Strömungsweges durch das Ventil und wird durch den Öffnungshub der Ventilnadel festgelegt.

Der Öffnungshub der Ventilnadel wird dabei durch eine die Ventilnadel beaufschlagende Betätigungseinrichtung oder, falls Justierfehler vorliegen, durch Anschlagen einer auf der Ventilnadel befestigten Federhülse an einem Ventilnadelführungskörper bestimmt. Infolge von Fertigungstoleranzen ist es daher schwierig, den gewünschten Querschnitt der Abspritzöffnung genau einzustellen. Außerdem können bei längerem Betrieb des bekannten Einspritzventils Änderungen des Querschnitts der Abspritzöffnung auftreten, da sowohl die Mittel zur Hubbegrenzung als auch der Ventilsitz und die mit diesem zusammenwirkende Dichtfläche am Schließkopf einem Verschleiß unterliegen.

Ein anderes bekanntes Einspritzventil (US 53 07 997) weist einen Ventilsitzkörper mit einer als Abspritzöffnung dienenden Ventilöffnung und einen Ventilnadelführungskörper mit einer Führungsbohrung für die Ventilnadel auf. Eine an der Ventilnadel vorgesehene Dichtfläche wirkt mit einem Ventilsitz zusammen, der die Ventilöffnung auf der vom Abspritzbereich abgewandten Seite umgibt. Strömungsmäßig vor der Abspritzöffnung liegt eine kegelmantelförmige Drallkammer, die von einer Vertiefung im Ventilsitzkörper und einem Vorsprung am Ventilnadelführungskörper begrenzt ist.

Die Zuführung von Kraftstoff zur Drallkammer erfolgt durch Kraftstoffkanäle bildende Bohrungen im Ventilnadelführungskörper. Die einzelnen Bohrungen weisen auslaßseitig jeweils einen Bohrungsabschnitt mit verringertem Durchmesser auf. Diese Bohrungsabschnitte bilden gemeinsam den für die Kraftstoffzumessung erforderlichen engsten Querschnitt im Strömungsweg durch das Einspritzventil. Wegen der strömungsmäßig hinter den Kraftstoffkanälen liegenden Drallkammer wird bei diesem bekannten Einspritzventil der Kraftstoff in Form einer gleichmäßigen, geschlossenen kegelmantelförmigen Kraftstofflamelle abgespritzt.

### VORTEILE DER ERFINDUNG

Das Einspritzventil mit den kennzeichnenden Merkmalen des Anspruchs 1 hat demgegenüber den Vorteil, daß einerseits die den engsten Strömungsquerschnitt festlegenden Kraftstoffkanäle vor Verschmutzungen geschützt sind und daß andererseits eine strähnige Kraftstofflamelle abgespritzt werden kann. Die insbesondere kegelmantelförmige Kraftstofflamelle hat also eine sich Umfangsrichtung ändernde Kraftstoffverteilung. Durch eine geeignete Ausbildung und Anordnung der Kraftstoffkanäle ist es daher möglich, die Kraftstoffverteilung in der Kraftstofflamelle optimal an den jeweiligen Brennraum anzupassen, so daß eine zusammenhängende Kraftstoffluftgemischwolke mit einem brennbaren Verhältnis von Kraftstoff zu Luft erzeugt werden kann.

Dabei läßt sich unter Berücksichtigung der Einbaudrehlage des Einspritzventils, der gegenseitigen Anordnung von Zündkerze und Einspritzventil sowie der Ausrichtung des Einspritzventils gegen die Brennraumachse erreichen, daß sich kein flüssiger Kraftstoff an der Brennraumwand oder dem Kolbenboden niederschlägt, daß die Zündkerze nicht durch Anspritzen mit Kraftstoff zu stark auskühlt und daß trotzdem an der Zündkerze ein stöchiometrisches Kraftstoffluftgemisch vorliegt.

Aus der DE-OS 38 20 509 ist bereits eine Einspritzdüse bekannt, mit der Dieselbrennstoff direkt in einen Brennraum eines Dieselmotors eingespritzt wird. Die Einspritzdüse weist einen Ventilkörper auf, der zur Bildung einer Abspritzöffnung eine von einem Ventilsitz umgebene Ventilöffnung hat. Außerdem besitzt die Einspritzdüse eine in ihre Schließstellung vorgespannte, einen Schließkopf aufweisende Ventilnadel, die sich so durch die Ventilöffnung hindurch erstreckt, daß der mit dem Ventilsitz zusammenwirkende Schließkopf bei geschlossenem Ventil abspritzseitig am Ventilsitz anliegt. Im Strömungsweg vor der Abspritzöffnung ist/sind in einer Ventilhülse an deren stromabwärtigen Ende eine oder mehrere Randnuten eingebracht.

Diese Einspritzdüse ist konstruktiv derart ausgestaltet, daß der Einspritzvorgang in mehrere Phasen unterteilt ist, in denen verschiedene Strömungswege in der Düse verschlossen oder freigegeben werden, so daß auch verschiedene Abspritzgeometrien in den einzelnen Phasen erzielt werden. Die Ventilhülse vollzieht in einer ersten Phase der Ventilöffnung eine Axialbewegung zusammen mit der in ihrer inneren Öffnung angeordneten Ventilnadel. Da die Ventilhülse an ihrem äußeren Umfang mehrere axial verlaufende Längsnuten besitzt, kann eine Voreinspritzung auf diese Anströmungsweise erfolgen. Beim weiteren Hub der Ventilnadel werden die Längsnuten durch das Eintauchen der Ventilhülse im Ventilkörper verschlossen, während eine Steuerbohrung in der Ventilhülse freigegeben wird, so daß Brennstoff in das Innere der Ventilhülse zwischen sich und der Ventilnadel eintreten kann. In dieser Phase werden Schnurstrahlen als Teil der Haupteinspritzung durch die Randnuten erzeugt. Im folgenden schlägt die Ventilhülse an einem gehäusefesten Anschlag an, während sich die Ventilnadel in Öffnungsrichtung noch weiter bewegt. Infolgedessen wird ein Ringspalt zwischen dem unteren Rand der Ventilhülse und dem Schließkopf gebildet, so daß unter hohem Druck ein weiterer Teil der Hauptabspritzmenge in Form eines Schirmstrahls in den Brennraum gelangt. Bei dieser Anordnung werden also mittels einer axial beweglichen Ventilhülse und deren Öffnungsgeometrie zeitlich aufeinanderfolgend zuerst Schnurstrahlen erzeugt, die nachfolgend von einer Schirmstrahlform des Brennstoffs ersetzt werden.

Durch die in den Unteransprüchen aufgeführten Maßnahmen sind vorteilhafte Weiterbildungen und Verbesserungen des im Hauptanspruch angegebenen Einspritzventils möglich.

Insbesondere wenn die Kraftstoffkanäle mittels Nuten realisiert werden, lassen sich die Herstellungskosten senken, ohne daß die Fertigungsgenauigkeit leidet. Insbesondere die Verwendung einer die Kraftstoffkanäle aufweisenden Zumeßscheibe, die dem Zulaufbereich der Ventilöffnung zugeordnet ist, führt zu einer besonders kostengünstigen Ausgestaltung des erfindungsgemäßen Einspritzventils.

Durch auf der Ventilnadel vorgesehene Anschlagmittel läßt sich die Betriebssicherheit des erfindungsgemäßen Einspritzventils verbessern, da die Ventilnadel bei einem Ventilnadelbruch in der Ventilöffnung festgehalten und das Einspritzventil gleichzeitig verschlossen wird.

### ZEICHNUNG

Ausführungsbeispiele der Erfindung sind in der Zeichnung vereinfacht dargestellt und in der nachfolgenden Beschreibung näher erläutert. Es zeigen:
- Fig. 1: eine teilweise geschnittene Ansicht eines erfindungsgemäßen Einspritzventils,
- Fig. 2: einen Schnitt durch eine Ventileinheit eines erfindungsgemäßen Einspritzventils,
- Fig. 3: eine vergrößerte Darstellung des Abspritzbereichs der Ventileinheit nach Fig. 2,
- Fig. 4: einen Schnitt durch den Abspritzbereich einer anderen Ventileinheit,
- Fig. 5: einen Schnitt durch die Ventileinheit nach Fig. 4 mit gebrochener Ventilnadel,
- Fig. 6: einen Schnitt durch eine weitere Ventileinheit,
- Fig. 7: einen Schnitt durch den Abspritzbereich der Ventileinheit nach Fig. 6 bei gebrochener Ventilnadel,
- Fig. 8: einen Schnitt durch eine Vorrichtung zur Befestigung eines Sicherungsrohres auf einer Ventilnadel,
- Fig. 9: einen Schnitt durch den Abspritzbereichs einer weiteren Ventileinheit,
- Fig. 10: einen Schnitt im wesentlichen nach Linie X - X in Fig. 9,
- Fig. 11: einen Schnitt durch den Abspritzbereichs noch einer weiteren Ventileinheit,
- Fig. 12: einen Schnitt durch eine Vorrichtung zum Einstellen des Srömungswiderstandes von als Nuten ausgebildeten Kraftstoffkanälen,
- Fig. 13: einen Schnitt durch den Abspritzbereichs noch einer weiteren Ventileinheit,
- Fig. 14: einen Schnitt durch eine Vorrichtung zum Schleifen eines Führungsabschnitts für eine Ventilnadel in dem Ventilkörper der Ventileinheit nach Fig. 13,
- Fig. 15: einen Schnitt durch eine Vorrichtung zum Erodieren von als Nuten ausgebildeten Kraftstoffkanälen in dem Ventilkörper der Ventileinheit nach Fig. 13,
- Fig. 16: einen Schnitt durch den Abspritzbereichs noch einer weiteren Ventileinheit,
- Fig. 17: einen Schnitt im wesentlichen nach Linie IV - IV in Fig. 16,
- Fig. 18: einen Schnitt im wesentlichen nach Linie V - V in Fig. 16,
- Fig. 19: einen Schnitt entsprechend Fig. 18 durch eine andere Ausgestaltung der Ventileinheit nach Fig. 16,
- Fig. 20: einen Schnitt durch eine weitere Ventileinheit mit einem Führungskörper für eine Ventilnadel und
- Fig. 21: einen Schnitt durch eine Ventileinheit entsprechend Fig. 20 mit einem anderen Führungskörper.

In den verschiedenen Figuren der Zeichnung sind einander entsprechende Teile mit gleichen Bezugszeichen versehen.

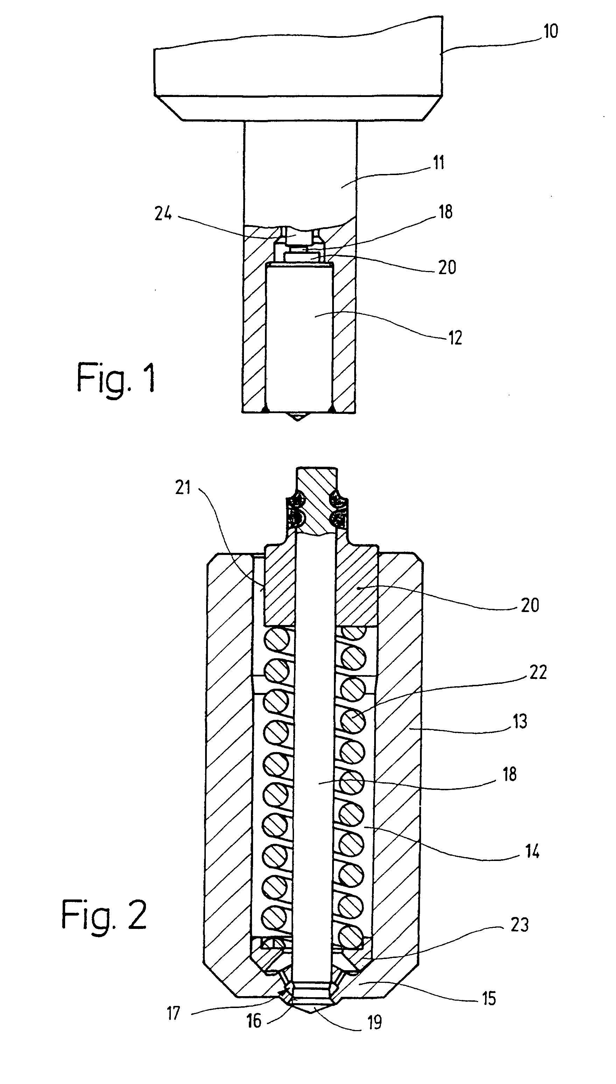

Wie Fig. 1 zeigt, weist das erfindungsgemäße Einspritzventil ein Ventilgehäuse 10 mit einem Auslaßrohr 11 auf, in das eine Ventileinheit 12 dicht eingesetzt ist. Wie in Fig. 2 dargestellt, umfaßt die Ventileinheit 12 einen Ventilkörper 13 mit einem Federraum 14, der abspritzseitig von einem Boden 15 begrenzt ist. In dem Boden 15 ist eine von einem abspritzseitig angeordneten Ventilsitz 16 umgebene Ventilöffnung 17 vorgesehen, durch die sich eine Ventilnadel 18 hindurch erstreckt.

Die Ventilnadel 18, die einen mit dem Ventilsitz 16 zusammenwirkenden Schließkopf 19 aufweist und im Bereich ihres Schließkopfes 19 in der Ventilöffnung 17 geführt ist, erstreckt sich durch den Federraum 14 und ist mit ihrem vom Schließkopf 19 abgewandten Ende fest mit einer im Federraum 14 geführten Führungshülse 20 verbunden. Die Führungshülse 20 weist eine sich über ihre axiale Länge erstreckende Ausnehmung 21 auf, z. B. eine als Flächenanschliff ausgebildete Abplattung oder eine oder mehrere Nuten, so daß Kraftstoff in den Federraum 14 einströmen kann.

Eine die Ventilnadel 18 in ihre Schließstellung vorspannende Schließfeder 22 ist auf der Ventilnadel 18 zwischen der Führungshülse 20 und einem am Boden 15 anliegenden Auflagering 23 angeordnet. Zum Öffnen des Einspritzventils ist eine nicht näher dargestellte Betätigungseinrichtung vorgesehen, die, wie in Fig. 1 angedeutet, über ein Stoßteil 24 die Ventilnadel 18 beaufschlagt, um diese gegen die Kraft der Schließfeder 22 in ihre Offenstellung zu bewegen.

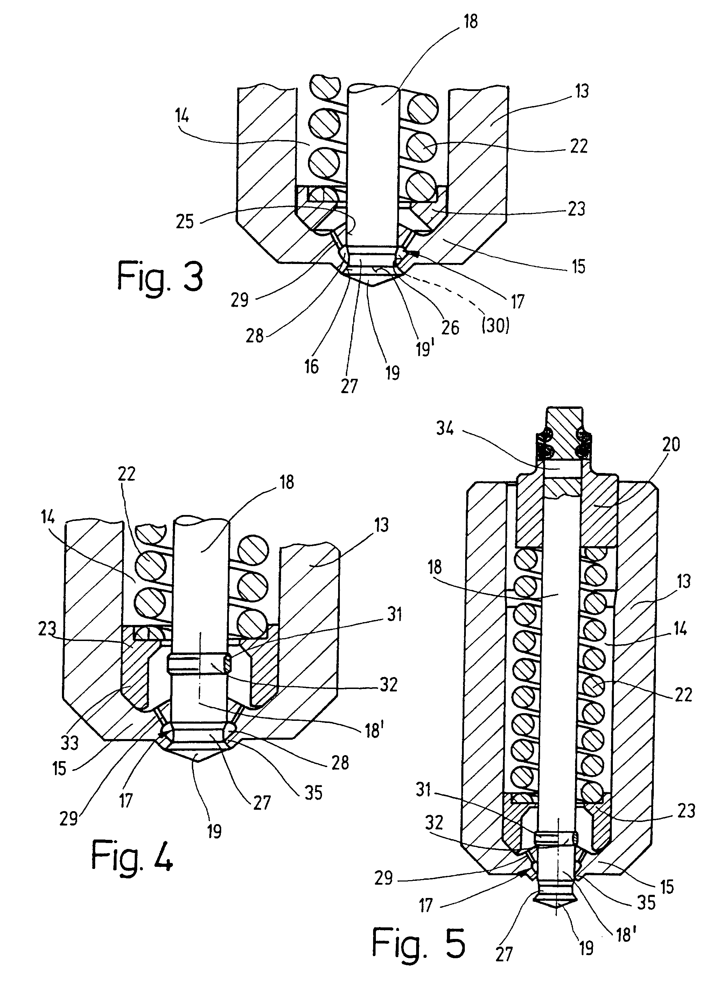

Wie in Fig. 3 zu erkennen ist, umfaßt die Ventilöffnung 17 einen Führungsabschnitt 25 und eine zwischen dem Führungsabschnitt 25 und dem die Ventilöffnung 17 umgebenden Ventilsitz 16 angeordnete umlaufende Nut 26. Die Nut 26 kann aber auch weggelassen werden, so daß sich der Führungsabschnitt 25 der Ventilöffnung 17 bis zum Ventilsitz 16 erstreckt.

Benachbart zu einer am Schließkopf 19 der Ventilnadel 18 vorgesehenen, mit dem Ventilsitz 16 zusammenwirkenden Dichtfläche 19' ist an der Ventilnadel 18 eine umlaufende Nut 27 ausgebildet, die zusammen mit der Nut 26 einen strömungsmäßig vor dem Ventilsitz 16 liegenden Ringraum 28 begrenzt. Fehlt die Nut 26 der Ventilöffnung 17 so wird der Ringraum 28 von der Nut 27 an der Ventilnadel 18 und dem im Bereich der Nut 27 liegenden Teil des Führungsabschnitts 25 begrenzt.

Im Boden 15 des Ventilkörpers 13 sind als Bohrungen ausgebildete Kraftstoffkanäle 29 vorgesehen, die um den Führungsabschnitt 25 herum verteilt sind und die schräg zur Ventilnadel 18 verlaufend in den Ringraum 28 münden. Die einzelnen Kraftstoffkanäle 29 besitzen jeweils einen definierten Querschnitt, so daß sie gemeinsam einen die Durchflußmenge bestimmenden engsten Querschnitt im Strömungsweg durch das Einspritzventil festlegen.

Um mit einem derartigen Einspritzventil Kraftstoff direkt in einen Brennraum eines Verbrennungsmotors einzuspritzen, wird die Ventilnadel 18 aus ihrer Schließstellung in ihre Offenstellung bewegt. Dabei bildet sich zwischen dem Ventilsitz 16 und der Dichtfläche 19' eine ringförmige Abspritzöffnung 30. Somit strömt bei offenem Einspritzventil Kraftstoff aus dem Federraum 14 durch die Kraftstoffkanäle 29 in den Ringraum 28 und weiter zur Abspritzöffnung 30, durch die der Kraftstoff dann abgespritzt wird.

Durch die einzelnen Kraftstoffkanäle 29 wird dabei eine Vielzahl von Kraftstoffstrahlen oder -strähnen erzeugt. Die einzelnen Kraftstoffstrahlen oder -strähnen werden an der Ventilnadel 18 von der Dichtfläche 19' umgelenkt, so daß eine im wesentlichen kegelmantelförmige Kraftstofflamelle oder -wolke im Abspritzbereich des Einspritzventils, also im jeweiligen Brennraum erzeugt wird. Die Kraftstoffstrahlen bleiben beim Durchströmen des Ringraums 28 und der Abspritzöffnung 30 im wesentlichen erhalten, so daß in der abgespritzten Kraftstofflamelle eine strähnenförmige Kraftstoffverteilung vorliegt.

Um die Kraftstoffverteilung in der Kraftstofflamelle zu beeinflussen, können die einzelnen Kraftstoffkanäle 29, deren Anzahl bei etwa 5 bis 20 liegt, umfangsmäßig gleich beabstandet sein oder aber unterschiedliche, genau festgelegte Umfangsabstände aufweisen. Außerdem ist es möglich, einzelne der Kraftstoffkanäle 29 mit einem größeren oder kleineren Querschnitt zu versehen, so daß die einzelnen Kraftstoffsträhnen der Kraftstofflamelle unterschiedlich dick sind. Die Kraftstoffkanäle 29 weisen Durchmesser im Bereich von 0,05 mm bis 0,2 mm auf.

Die die Kraftstoffkanäle 29 bildenden Bohrungen werden insbesondere funkenerodiert oder mit einem Laserstrahl gebohrt. Um den gemeinsamen Strömungswiderstand der Kraftstoffkanäle 29 genau auf einen vorgegebenen Wert einzustellen, werden die Kraftstoffkanäle 29 insbesondere hydroerosiv bearbeitet. Hierzu wird die Ventilöffnung 17 im Bereich ihres Führungsabschnitts 25 verschlossen, und flüssiges Schleifmittel wird unter hohem Druck durch die Kraftstoffkanäle 29 gepumpt, bis der gewünschte Strömungswiderstand erreicht ist. Bei dieser Bearbeitung werden die einlaufseitigen Kanten der Kraftstoffkanäle 29 verrundet, wodurch sich der Strömungswiderstand verringert.

Einspritzventile, bei denen sich die Ventilnadel 18 durch die Ventilöffnung 17 hindurch erstreckt und mit ihrem Schließkopf 19 bei geschlossenem Ventil abspritzseitig am Ventilsitz 16 anliegt, haben den Vorteil, daß die einzelnen Elemente für die Kraftstoffzumessung und für die Kraftstoffverteilung in der Kraftstofflamelle bei geschlossenem Ventil vollständig von der unsauberen Brennraumatmosphäre getrennt sind, so daß sich keine die Einspritzfunktion beeinträchtigenden Verunreinigungen daran ablagern können.

Um bei einem Bruch der Ventilnadel 18 zu verhindern, daß der abgebrochene Teil der Ventilnadel 18 vom Kraftstoffdruck im Federraum 14 durch die Ventilöffnung 17 hindurch in den Brennraum gedrückt wird, ist es zweckmäßig, an der Ventilnadel 18 Anschlagmittel vorzusehen, die mit einem der Ventilöffnung 17 zugeordneten Gegenanschlag so zusammenwirken, daß eine Bewegung der Ventilnadel 18 in Abspritzrichtung begrenzt ist, ohne daß dabei der für den störungsfreien Betrieb des Einspritzventils erforderliche Öffnungshub der Ventilnadel 18 beeinträchtigt wird.

Wie Fig. 4 zeigt, kann als derartiges Anschlagmittel ein Sicherungsring 31 vorgesehen sein, der in einer umlaufenden Nut 32 an der Ventilnadel 18 angeordnet ist. Um zu verhindern, daß der Sicherungsring 31 die normale Funktion des Einspritzventils stört, weist der Auflagering 23 für die Schließfeder 22 einen Axialflansch 33 auf, mit dem sich der Auflagering 23 am Boden 15 des Ventilkörpers 13 abstützt.

Tritt ein Ventilnadelbruch auf, z. B. ein Riß 34 in der Ventilnadel 18 nahe ihrer Befestigung an der Führungshülse 20, so wird, wie in Fig. 5 dargestellt, der abgebrochene Teil der Ventilnadel 18 in Abspritzrichtung soweit durch die Ventilöffnung 17 geschoben bis der Sicherungsring 31 im Umfangsbereich der Ventilöffnung 17 am Boden 15 anliegt. Hierbei dient also der Boden 15 des Ventilkörpers 13 als Gegenanschlag für den Sicherungsring 31.

Die Länge des vom Sicherungsring 31 zugelassenen Verschiebeweges der Ventilnadel 18 ist dabei größer als der axiale Abstand des stromaufwärts gelegenen Randes der Nut 27 vom Schließkopf 19. Somit kann sich die Ventilnadel 18 mit ihrem zwischen der Nut 27 und dem Sicherungsring 31 gelegenen Abschnitt 18', der normalerweise im Führungsabschnitt 25 der Ventilöffnung 17 geführt ist, bis in einen unmittelbar an den Ventilsitz 16 anschließenden Abschnitt der Ventilöffnung 17 hinein erstrecken und so die Ventilöffnung 17 dicht verschließen. Der an den Ventilsitz 16 stromaufwärts anschließende Abschnitt der Ventilöffnung 17 kann dabei von einem Bund 35 zwischen dem Ventilsitz 16 und der Nut 26 oder, falls die Nut 26 fehlt, vom Führungsabschnitt 25 gebildet sein. Der Bund 35 weist dabei den gleichen Innendurchmesser auf wie der Führungsabschnitt 25.

Auf diese Weise läßt sich also bei einem Ventilnadelbruch nicht nur verhindern, daß Bruchstücke der Ventilnadel 18 in den Brennraum gelangen und dort zu einem Motorschaden führen, sondern auch daß Kraftstoff aus einem schadhaften Einspritzventil austritt.

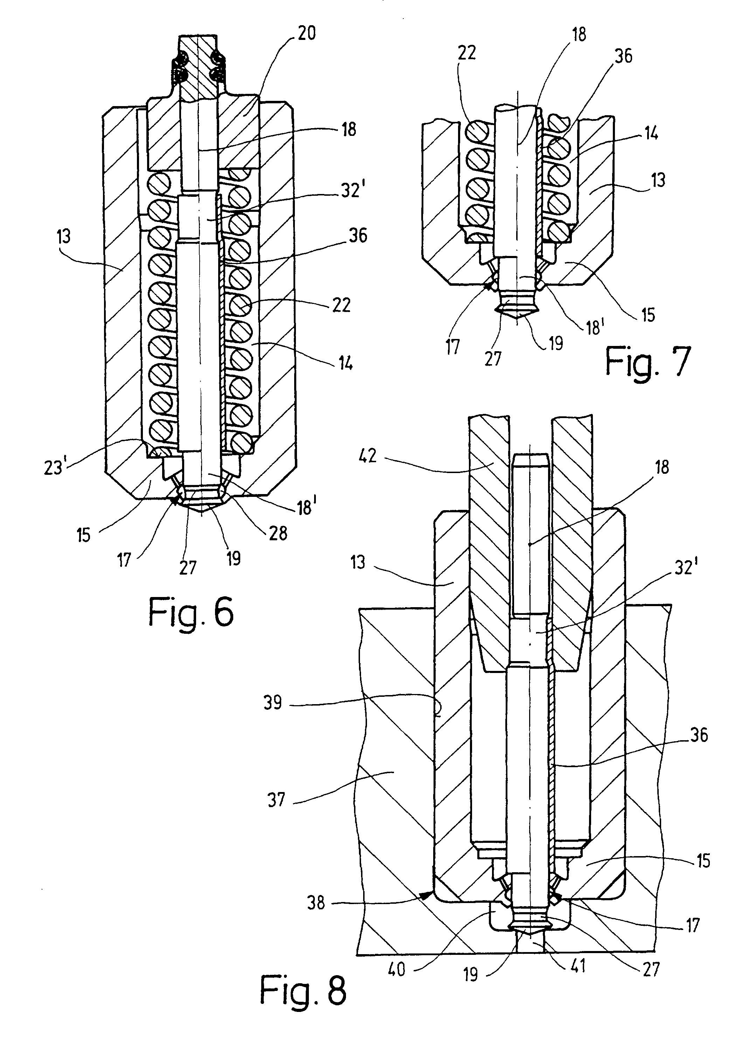

Bei einer anderen Ausgestaltung der Erfindung ist, wie in Fig. 6 und 7 dargestellt, ein Sicherungsrohr 36 vorgesehen, das auf der Ventilnadel 18 angeordnet ist. Die Schließfeder 22 ist dabei auf einer am Boden 15 ausgebildeten Schulter 23' abgestützt.

Zur Befestigung des Sicherungsrohres 36 ist an der Ventilnadel 18 eine umlaufende Nut 32' nahe der Führungshülse 20 vorgesehen, in die das Sicherungsrohr 36 mit seinem vom Schließkopf 19 abgewandten Ende eingedrückt ist.

Die Verwendung eines Sicherungsrohres 36 vereinfacht die Montage des Einspritzventils, da es sich unabhängig von Fertigungstoleranzen einfach und genau auf der Ventilnadel 18 anbringen läßt.

Zweckmäßigerweise wird zur einfachen Montage des Sicherungsrohres 36 eine Spannvorrichtung 37 verwendet, die, wie in Fig. 8 gezeigt, eine Stufenbohrung 38 mit einem Aufnahmebereich 39 für den Ventilkörper 13 und einem daran anschließenden Abschnitt 40 für das den Schließkopf 19 tragende Ende der Ventilnadel 18 aufweist. Eine zentrale Öffnung 41, deren Rand einen Justieranschlag für den Schließkopf 19 bildet, schließt sich an den Abschnitt 40 an.

Um das Sicherungsrohr 36 auf der Ventilnadel 18 zu befestigen, wird zunächst die Ventilnadel 18 in die Ventilöffnung 17 eingeführt. Der so vorbereitete Ventilkörper 13 wird dann in den Aufnahmebereich 39 der Spannvorrichtung 37 eingesetzt. Die Ventilnadel 18 wird danach soweit durch die Ventilöffnung 17 in den Abschnitt 40 der Stufenbohrung 38 heraus geschoben, bis der Schließkopf 19 am Rand der Öffnung 41 anstößt. Jetzt wird das Sicherungsrohr 36 so weit auf die Ventilnadel 18 aufgeschoben, bis es mit seinem einen Ende im Bereich der Ventilöffnung 17 gegen den Boden 15 anstößt. Das andere Ende des Sicherungsrohres 36 liegt nun über der Nut 32' benachbart zu ihrem vom Schließkopf 19 abgewandten Rand.

Jetzt läßt sich das vom Schließkopf 19 abgewandte Ende des Sicherungsrohres 36 mit Hilfe eines rohrförmigen Stempels 42 in die Nut 32' drücken, so daß es auf der Ventilnadel 18 festgelegt ist.

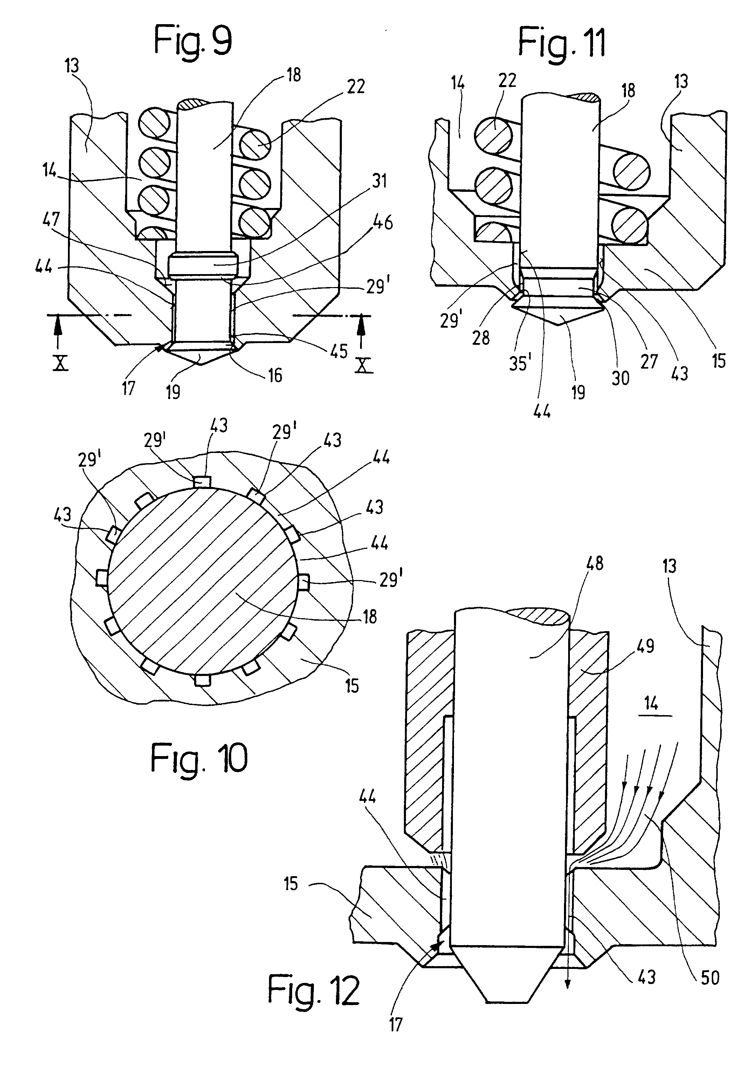

Bei einer anderen in Fig. 9 und 10 gezeigten Ausgestaltung der Erfindung sind in der Wandung der Ventilöffnung 17 Nuten 43 vorgesehen, zwischen denen Führungsstege 44 für die Ventilnadel 18 ausgebildet sind. Die Führungsstege 44 enden mit Abstand zum Ventilsitz 16, so daß zwischen dem erweiterten Abschnitt der Ventilöffnung 17 und der Ventilnadel 18 ein Ringraum 45 gebildet ist. Die Nuten 43 legen dabei zusammen mit der Ventilnadel 18 Kraftstoffkanäle 29' fest, die in den Ringraum 45 münden. Die Nuten 43 können sich aber auch bis in den Bereich des Ventilsitzes 16 erstrecken.

Die Anzahl der die Kraftstoffkanäle 29' bildenden Nuten 43, ihr freier Querschnitt, ihre Form (rund, rechteckig, tief oder breit) sowie ihre umfangsmäßige Verteilung kann, zum Einstellen einer gewünschten Kraftstoffverteilung in der abgespritzten Kraftstofflamelle, ebenso variiert werden wie die entsprechenden Größen bei den durch Bohrungen gebildeten Kraftstoffkanälen 29. Außerdem ist es möglich, die Nuten 43 schraubenlinienförmig auszubilden, um einer abgespritzten Kraftstofflamelle einen Drall zu erteilen.

Um bei einem derartigen Einspritzventil sicherzustellen, daß bei einem Ventilnadelbruch die Ventilnadel 18 nicht nur in der Ventilöffnung 17 zurückgehalten wird, sondern daß auch die Ventilöffnung 17 verschlossen wird, ist der Sicherungsring 31 mit einer Fase 46 versehen, mit der der Sicherungsring 31 bei einem Ventilnadelbruch gegen eine konische die Ventilöffnung 17 umgebende Anschlagfläche 47 anstößt und so die Ventilöffnung 17 abdichtet. Der Sicherungsring 31 ist zweckmäßigerweise aus einem Polymerwerkstoff hergestellt, so daß bei einem Ventilnadelbruch eine besonders zuverlässige Abdichtung der Ventilöffnung 17 erzielt wird.

Bei dem in Fig. 11 gezeigten Einspritzventil enden die die Kraftstoffkanäle 29' bildenden Nuten 43 mit Abstand zum Ventilsitz 16. Zwischen dem abspritzseitigen Ende der Nuten 43 und dem Ventilsitz 16 ist hier ein Bund 35' vorgesehen, dessen Durchmesser dem Führungsdurchmesser der Ventilöffnung 17 im Bereich der Führungsstege 44 entspricht. Zur Bildung eines Ringraums 28 ist an der Ventilnadel 18 eine umlaufende Nut 27 unmittelbar benachbart zum Schließkopf 19 vorgesehen.

Hierbei läßt sich ein Ventilsitzdurchmesser erreichen, der nur geringfügig größer ist als der Durchmesser der Ventilöffnung 17, so daß auch die Angriffsfläche für den Kraftstoffdruck im Einspritzventil und für den Brennraumdruck möglichst klein gehalten wird. Dies hat den Vorteil, daß zur Bewegung der Ventilnadel 18 kleinere Kräfte ausreichen. Damit kann auch die Betätigungseinrichtung entsprechend kleiner aufgebaut werden. Insbesondere lassen sich somit für die Betätigungseinrichtung kleinere Elektromagneten verwenden, wodurch das Einspritzventil insgesamt kleiner und kompakter wird.

Wird die Ventilnadel 18 in ihre in Fig. 11 dargestellte Offenstellung verschoben, so ergibt sich ein Strömungsweg vom Federraum 14 durch die Kraftstoffkanäle 29' zum Ringraum 28 und weiter zur ringförmigen Abspritzöffnung 30, die vom Ventilsitz 16 und der Dichtfläche 19' am Schließkopf 19 der Ventilnadel 18 begrenzt wird.

Ein besonderer Vorteil der mittels Nuten 43 gebildeten Kraftstoffkanäle 29' besteht darin, daß sie schneller hergestellt werden können, da sich jeweils zwei einander diametral gegenüberliegende Nuten 43 gleichzeitig mittels einer flachen Erodierelektrode ausbilden lassen. Dies hat außerdem den Vorteil, daß sich eine höhere Fertigungsgenauigkeit erreichen läßt, da flache Erodierelektroden steifer sind als drahtförmige, die zur Herstellung von Bohrungen verwendet werden.

Der gemeinsame Strömungswiderstand der von den Nuten 43 gebildeten Kraftstoffkanäle 29' läßt sich besonders vorteilhaft mit einem elektrochemischen Bearbeitungsverfahren einstellen. Wie in Fig. 12 dargestellt, wird dazu die Ventilöffnung 17 im Bereich zwischen den Führungsstegen 44 mittels eines isolierenden Stiftes 48, der z. B. aus Keramik besteht, verschlossen. Auf den isolierenden Stift 48 wird dann eine rohrförmige Elektrode 49 aufgesteckt und bis in den Einlaufbereich der Nuten 43 gebracht. Dann wird ein Elektrolyt durch den Federraum 14 und die Nuten 43 gepumpt, wie durch die Pfeile 50 angedeutet. Dabei läßt sich der jeweils erreichte Strömungswiderstand während des elektrochemischen Verrundens der Einlaufbereiche der Nuten 43 einfach messen. Hierzu kann beispielsweise die statische Durchflußmenge des Elektrolyten bei konstant gehaltenem Pumpendruck bestimmt werden.

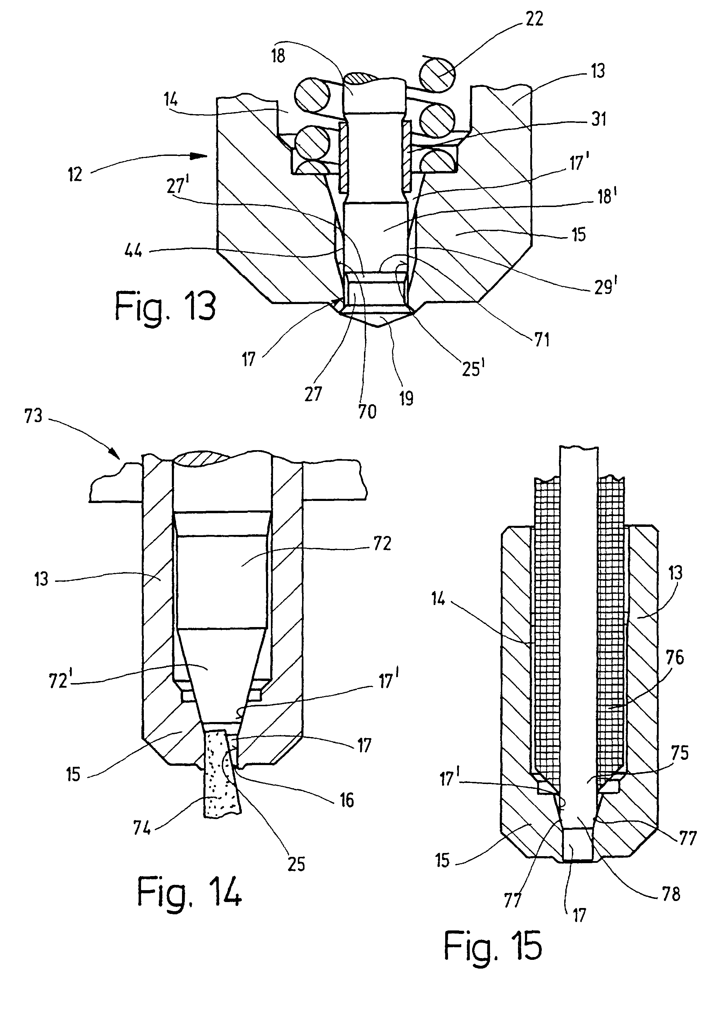

Bei der Ventileinheit 12 nach Fig. 13 weist die Ventilöffnung 17 einlaßseitig einen kegeligen Abschnitt 17' auf, an den sich zum Ventilsitz 16 hin ein Führungsabschnitt 25' anschließt. Im Bereich des Führungsabschnitts 25' sind als Kraftstoffkanäle 29' axiale Nuten vorgesehen, zwischen denen Führungsstege 44 liegen. Die Kraftstoffkanäle 29' weisen an ihrem auslaßseitigen Ende schräg auslaufende Schrägflächen 70 auf und enden mit Abstand vor dem Ventilsitz 16, so daß ein umlaufender Bund 35' gebildet ist. Die Winkel zwischen den Schrägflächen 70 und der Ventilnadelachse sowie zwischen dem kegeligen Abschnitt 17' und der Ventilnadelachse sind dabei in etwa gleich.

Die Ventilnadel 18 weist benachbart zu ihrem Schließkopf 19 eine umlaufende Nut 27 auf, die auf der vom Schließkopf 19 abgewandten Seite über eine Kegelfläche 27' in einen zylindrischen Abschnitt 18' übergeht, so daß an der Ventilnadel 18 eine umlaufende Kante 71 gebildet ist, die im Bereich der Schrägflächen 70 der Kraftstoffkanäle 29' liegt. Der Winkel zwischen der Kegelfläche 27' und der Ventilnadelachse ist dabei größer als die Winkel zwischen den Schrägflächen 70 und der Ventilnadelachse bzw. zwischen dem kegeligen Abschnitt 17' und der Ventilnadelachse.

Wird beim Betrieb des erfindungsgemäßen Einspritzventils die Ventilnadel 18 in ihre Offenstellung verschoben, so liegt der engste Querschnitt des Strömungsweges durch das Einspritzventil zwischen der Kante 71 und den Schrägflächen 70 der Kraftstoffkanäle 29'.

Bei einem Ventilnadelbruch wird die Ventilöffnung 17 durch den bis in den Bereich des Bundes 35' verschobenen zylindrischen Abschnitt 18' der Ventilnadel 18 verschlossen, während der Sicherungsring 31 verhindert, daß die Ventilnadel 18 vollständig aus dem Ventilkörper 13 heraus gedrückt wird.

Wie in Fig. 14 dargestellt, wird der Ventilkörper 13 nach dem Ausbilden des kegeligen Abschnitts 17' der Ventilöffnung 17 auf einem Aufnahmedorn 72 einer Spanneinrichtung 73 angeordnet. Der Aufnahmedorn 72 weist dabei eine konische Spitze 72' auf, deren Kegelwinkel dem Kegelwinkel des kegeligen Abschnitts 17' entspricht. Sobald der Ventilkörper 13 in der beschriebenen Weise angeordnet ist, können der Führungsabschnitt 25' und der Ventilsitz 16 geschliffen werden. Ein Schleifwerkzeug 74 zum Schleifen des Führungsabschnitts ist in Fig. 14 dargestellt.

Durch die Anordnung des Ventilkörpers 13 mit dem kegeligen Abschnitt 17' der Ventilöffnung 17 auf dem Aufnahmedorn 72 der Spanneinrichtung 73 können die Rundlaufabweichungen zwischen dem kegeligen Abschnitt 17' und dem Führungsabschnitt 25' gering gehalten werden.

Zum Ausbilden der Kraftstoffkanäle 29' wird zunächst, wie in Fig. 15 dargestellt eine Erodierelektrode 75 zusammen mit ihrer Elektrodenführung 76 in den Federraum 14 des Ventilkörpers 13 eingeführt. Danach wird die Erodierelektrode 75 durch Umpolen des Erodierstroms an dem kegeligen Abschnitt 17' der Ventilöffnung 17 abgerichtet, so daß die Schräge der Seitenkanten 77 der Erodierelektrodenspitze 78 der Schräge des kegeligen Abschnitts 17' entspricht. Anschließend werden die Kraftstoffkanäle 29' erodiert. Durch das Abrichten der Erodierelektrode 75 an dem kegeligen Abschnitt 17' ist die Symmetrie der Schrägflächen 70 der Kraftstoffkanäle 29' zum Führungsabschnitt 25' sehr genau. Damit ergibt sich auch eine sehr genaue Symmetrie der abgespritzten Kraftstoffstrahlen.

Soll bei gegebenem Hub der Ventilnadel 18 der Kraftstoffdurchfluß durch das erfindungsgemäße Einspritzventil vergrößert und an einen vorgegebenen Wert angepaßt werden, so läßt sich dies auf einfache Weise durch Abschleifen der die Nut 27 begrenzenden Kegelfläche 27' erreichen.

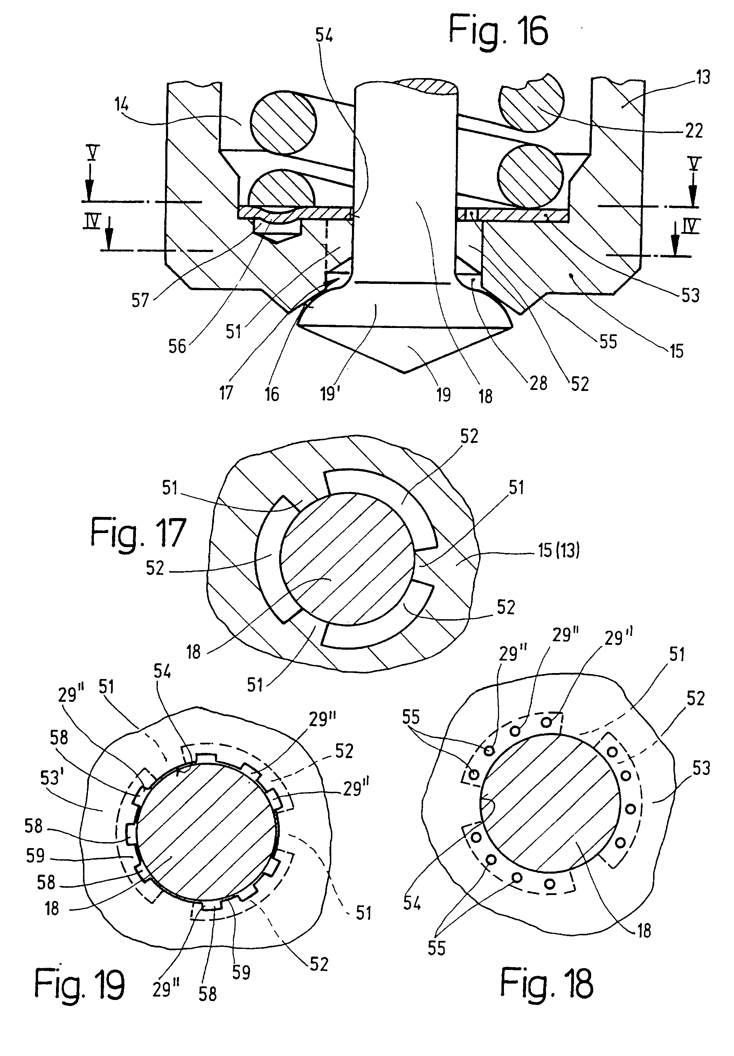

Bei einem weiteren in Fig. 16, 17 und 18 dargestellten erfindungsgemäßen Einspritzventil weist die Ventilöffnung 17 im Boden 15 des Ventilkörpers 13 umfangsmäßig verteilte Führungsstege 51 auf, zwischen denen Kraftstoffdurchflußbereiche 52 gebildet sind, die in einen strömungsmäßig vor dem Ventilsitz 16 liegenden Ringraum 28 übergehen. Auf dem Boden 15 des Ventilkörpers 13 liegt eine Zumeßscheibe 53 mit einer zentralen Öffnung 54, durch die sich die Ventilnadel 18 hindurch erstreckt, und mit einer Vielzahl von Kraftstoffkanäle 29" bildenden Zumeßöffnungen 55 auf und wird von der Schließfeder 22 in Anlage am Boden 15 gehalten.

Wie Fig. 18 zeigt, sind die einzelnen Zumeßöffnungen 55 in Gruppen zusammengefaßt und den einzelnen Kraftstoffdurchflußbereichen 52 der Ventilöffnung 17 zugeordnet. Die Zumeßscheibe 53 weist in ihrem Auflagebereich einen zum Boden 15 des Ventilkörpers 13 hin vorstehenden Vorsprung 56 auf, der z. B. durch eine Eindrückung oder Vertiefung der Zumeßscheibe 53 gebildet sein kann und der in eine Ausnehmung 57 im Boden 15 eingreift oder einrastet. Durch das Zusammenwirken der Ausnehmung 57 mit dem Vorsprung 56 wird die Drehstellung der Zumeßscheibe 53 relativ zum Ventilkörper 13 festgelegt, so daß die einzelnen Zumeßöffnungen 55 den Kraftstoffdurchflußbereichen 52 zuverlässig in der gewünschten Weise zugeordnet sind.

Bei einer anderen Ausgestaltung der Zumeßscheibe 53' (Fig. 19) sind die Kraftstoffkanäle 29" durch nutartige Ausnehmungen 58 im Rand der zentralen Öffnung 54 gebildet, zwischen denen Stege 59 vorgesehen sind.

Bei diesem erfindungsgemäßen Einspritzventil läßt sich die Ventileinheit 12 besonders kostengünstig herstellen, da sich die Zumeßscheibe 53, 53' auf einfache Weise genau herstellen läßt. Die Zumeßscheibe 53, 53' kann beispielsweise gestanzt werden oder durch Funkenerosion oder Laserschneiden ausgeschnitten werden. Außerdem ist es möglich, die Zumeßscheibe 53, 53' durch elektrochemisches Abscheiden oder durch elektrochemischen Abtrag herzustellen.

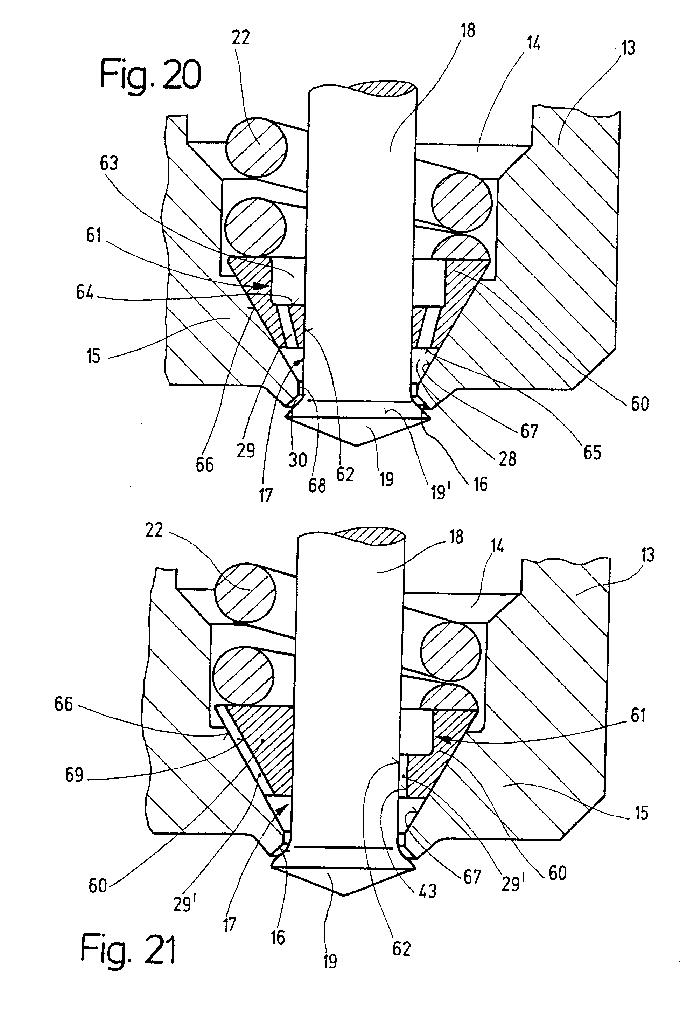

Bei einem anderen erfindungsgemäßen Einspritzventil ist, wie Fig. 20 zeigt, ein Führungskörper 60 für die Ventilnadel 18 vorgesehen, der eine zentrale Bohrung 61 mit einem Führungsabschnitt 62 und einem dem Federraum 14 zugewandten erweiterten Bereich 63 aufweist. Kraftstoffkanäle 29 bildende Bohrungen erstrecken sich von einer zwischen dem erweiterten Bereich 63 und dem Führungsabschnitt 62 liegenden Schulter 64 zu einer dem Ventilsitz 16 zugewandten Stirnfläche 65 des Führungskörpers 60 und münden in einen Ringraum 28, der zwischen dem Führungskörper 60 und dem Ventilsitz 16 in der Ventilöffnung 17 ausgebildet ist.

Vorzugsweise weist der Führungskörper 60, der von der Schließfeder 22 in die Ventilöffnung 17 gedrückt wird, eine konische Außenumfangsfläche 66 auf, mit der er an einer entsprechenden Innenumfangsfläche 67 der Ventilöffnung 17 anliegt. Die Innenumfangsfläche 67 endet mit einem Abstand vor dem Ventilsitz 16, so daß ein Bund 68 gebildet ist, in dessen Bereich der Durchmesser der Ventilöffnung 17 größer ist, als der Durchmesser der Ventilnadel 18.

Bei dieser Ausgestaltung kann die konische Innenumfangsfläche 67 der Ventilöffnung 17 zusammen mit dem Ventilsitz 16 in einer Aufspannung geschliffen werden, so daß die Innenumfangsfläche 67 und der Ventilsitz 16 nur sehr geringe Rundlaufabweichungen aufweisen. Entsprechend können die zentrale Bohrung 61, die Bohrungen für die Kraftstoffkanäle 29 und die konische Außenumfangsfläche 66 am Führungskörper 60 mit sehr kleinen Rundlaufabweichungen in einer Aufspannung hergestellt werden. Damit lassen sich bei der zusammengebauten Ventileinheit 12 der Führungsabschnitt 62 für die Ventilnadel 18 und der Ventilsitz 16 sehr genau gegeneinander ausrichten.

Wird das anhand von Fig. 20 beschriebene Einspritzventil zum Abspritzen einer Kraftstofflamelle geöffnet, so strömt Kraftstoff vom Federraum 14 durch den erweiterten Bereich 63 der zentralen Bohrung 61 und die Kraftstoffkanäle 29 in den Ringraum 28 und weiter am Bund 68 vorbei zur ringförmigen Abspritzöffnung 30, die sich beim Abheben des Schließkopfes 19 vom Ventilsitz 16 zwischen dem Ventilsitz 16 und der Dichtfläche 19' öffnet. Dabei bleiben die aus den Kraftstoffkanälen austretenden Kraftstoffstrahlen oder -strähnen im wesentlichen erhalten.

Wie Fig. 21 zeigt, kann der Führungskörper 60 zur Ausbildung von Kraftstoffkanälen 29' auf seiner Außenumfangsfläche 66 (linke Hälfte von Fig. 21) oder im Führungsabschnitt 62 der zentralen Bohrung 61 (rechte Hälfte von Fig. 21) mit Nuten 69 bzw. 43 versehen sein.

Die Ausbildung der die Kraftstoffkanäle 29' bildenden Nuten 69 in der Außenumfangsfläche 66 des Führungskörpers 60 hat dabei den Vorteil, daß sich die Kraftstoffkanäle 29' besonders einfach und genau herstellen lassen.

Bei der Ausbildung der Kraftstoffkanäle 29' im Führungsabschnitt 62 ergibt sich eine besonders günstige Führung der Kraftstoffströmung durch das Einspritzventil.

## Patentansprüche

1. Einspritzventil, insbesondere zum direkten Einspritzen von Kraftstoff in einen Brennraum eines Verbrennungsmotors,
mit einem Ventilkörper (13), der zur Bildung einer Abspritzöffnung (30) eine von einem Ventilsitz (16) umgebene Ventilöffnung (17) aufweist, und
mit einer in ihre Schließstellung vorgespannten, einen Schließkopf (19) aufweisenden Ventilnadel (18), die sich so durch die Ventilöffnung (17) hindurch erstreckt, daß der mit dem Ventilsitz (16) zusammenwirkende Schließkopf (19) bei geschlossenem Ventil abspritzseitig am Ventilsitz (16) anliegt,
mit einer im Strömungsweg vor der Abspritzöffnung (30) angeordneten Vielzahl von umfangsmäßig verteilten Kraftstoffkanälen (29, 29', 43), die derart ausgebildet sind, daß die einzelnen Querschnitte der Kraftstoffkanäle (29, 29', 43) gemeinsam einen die Durchflußmenge bestimmenden Querschnitt des Strömungsweges durch das Ventil festlegen und die aus ihnen austretenden Kraftstoffstrahlen oder - strähnen bis hinter die Abspritzöffnung (30) im wesentlichen erhalten bleiben,
**dadurch gekennzeichnet,**
**daß** die Kraftstoffkanäle (29, 29', 43) stromaufwärts des Ventilsitzes (16) unmittelbar im Ventilkörper (13) ausgebildet sind.

2. Einspritzventil nach Anspruch 1, **dadurch gekennzeichnet, daß** die Kraftstoffkanäle (29, 29', 43) in einen die Ventilnadel (18) umgebenden Ringraum (28, 45) münden, der vor der Abspritzöffnung (30) in der Ventilöffnung (17) vorgesehen ist.

3. Einspritzventil nach Anspruch 1 oder 2, **dadurch gekennzeichnet, daß** die Kraftstoffkanäle (29, 29', 43) in einem die Ventilnadel (18) im Bereich ihres Schließkopfes (19) führenden Führungsabschnitt (25) ausgebildet sind.

4. Einspritzventil nach einem der vorhergehenden Ansprüche, **dadurch gekennzeichnet, daß** die Kraftstoffkanäle (29) als Bohrungen ausgebildet sind.

5. Einspritzventil nach einem der Ansprüche 1 bis 3, **dadurch gekennzeichnet, daß** die Kraftstoffkanäle (29', 43) als Nuten in der Wandung einer die Ventilnadel (18) führenden Öffnung (17) ausgebildet sind.

6. Einspritzventil nach Anspruch 5, **dadurch gekennzeichnet, daß** die als Nuten ausgebildeten Kraftstoffkanäle (29') auslaßseitig Schrägflächen (70) aufweisen, die mit einer an der Ventilnadel (18) vorgesehenen Kante (71) den die Durchflußmenge bestimmenden Querschnitt des Strömungsweges durch das Ventil festlegen.

7. Einspritzventil nach Anspruch 6, **dadurch gekennzeichnet, daß** die die Ventilnadel (18) führende Öffnung (17) einlaßseitig einen kegeligen Abschnitt (17') aufweist, der mit der Ventilnadelachse im wesentlichen den gleichen Winkel einschließt wie die Schrägflächen (70) der Kraftstoffkanäle (29').

8. Einspritzventil nach einem der Ansprüche 2 bis 7, **dadurch gekennzeichnet, daß** der Durchmesser der Ventilöffnung (17) im Bereich unmittelbar vor dem Ventilsitz (16) dem Führungsdurchmesser für die Ventilnadel (18) entspricht, und daß die Ventilnadel (18) benachbart zum Schließkopf (19) eine den Ringraum (28) innen begrenzende umlaufende Nut (27) aufweist.

9. Einspritzventil nach Anspruch 8, **dadurch gekennzeichnet, daß** in der Wandung der Ventilöffnung (17) eine den Ringraum (28) außen begrenzende umlaufende Nut (26) so angeordnet ist, daß die Ventilöffnung (17) zwischen der Nut (26) und dem Ventilsitz (16) einen Bund (35) aufweist.

10. Einspritzventil, insbesondere zum direkten Einspritzen von Kraftstoff in einen Brennraum eines Verbrennungsmotors,
mit einem Ventilkörper (13), der zur Bildung einer Abspritzöffnung (30) eine von einem Ventilsitz (16) umgebene Ventilöffnung (17) aufweist, und
mit einer in ihre Schließstellung vorgespannten, einen Schließkopf (19) aufweisenden Ventilnadel (18), die sich so durch die Ventilöffnung (17) hindurch erstreckt, daß der mit dem Ventilsitz (16) zusammenwirkende Schließkopf (19) bei geschlossenem Ventil abspritzseitig am Ventilsitz (16) anliegt,
mit einer im Strömungsweg vor der Abspritzöffnung (30) angeordneten Vielzahl von umfangsmäßig verteilten Kraftstoffkanälen (29, 29', 29"), die derart ausgebildet sind, daß die einzelnen Querschnitte der Kraftstoffkanäle (29, 29', 29") gemeinsam einen die Durchflußmenge bestimmenden Querschnitt des Strömungsweges durch das Ventil festlegen und die aus ihnen austretenden Kraftstoffstrahlen oder -strähnen bis hinter die Abspritzöffnung (30) im wesentlichen erhalten bleiben, wobei die Kraftstoffkanäle (29, 29', 29'') stromaufwärts des Ventilsitzes (16) unabhängig vom Ventilkörper (13) in einem zusätzlichen Bauteil (53, 60) ausgebildet sind,
**dadurch gekennzeichnet,**
**daß** das die Kraftstoffkanäle (29, 29', 29") aufweisende Bauteil (53, 60) fest mit dem Ventilkörper (13) verbunden ist.

11. Einspritzventil nach Anspruch 10, **dadurch gekennzeichnet, daß** die Kraftstoffkanäle (29, 29', 29") in einen die Ventilnadel (18) umgebenden Ringraum (28, 45) münden, der vor der Abspritzöffnung (30) in der Ventilöffnung (17) vorgesehen ist.

12. Einspritzventil nach Anspruch 10 oder 11, **dadurch gekennzeichnet, daß** das zusätzliche Bauteil ein konischer Führungskörper (60) ist, der als Führungsteil für die Ventilnadel (18) in die einen konischen Abschnitt aufweisende Ventilöffnung (17) eingesetzt ist.

13. Einspritzventil nach einem der Ansprüche 10 bis 12, **dadurch gekennzeichnet, daß** die Kraftstoffkanäle (29, 29'') als Bohrungen ausgebildet sind.

14. Einspritzventil nach einem der Ansprüche 10 bis 12, **dadurch gekennzeichnet, daß** die Kraftstoffkanäle (29', 43) als Nuten in der Wandung einer die Ventilnadel (18) führenden Öffnung (17, 62) ausgebildet sind.

15. Einspritzventil nach Anspruch 12, **dadurch gekennzeichnet, daß** die Kraftstoffkanäle (29') als Nuten (69) in einer konischen Außenumfangsfläche (66) des Führungskörpers (60) ausgebildet sind.

16. Einspritzventil nach Anspruch 10 oder 11, **dadurch gekennzeichnet, daß** dem Einlaßbereich der Ventilöffnung (17) eine die Kraftstoffkanäle (29'') aufweisende Zumeßscheibe (53, 53') mit einer zentralen Öffnung (54) für die Ventilnadel (18) zugeordnet ist.

17. Einspritzventil nach Anspruch 16, **dadurch gekennzeichnet, daß** die Kraftstoffkanäle (29'') von Zumeßöffnungen (55) in der Zumeßscheibe (53) gebildet sind.

18. Einspritzventil nach Anspruch 16, **dadurch gekennzeichnet, daß** die Kraftstoffkanäle (29'') von Ausnehmungen (58) im Rand der zentralen Öffnung (54) der Zumeßscheibe (53') gebildet sind.

19. Einspritzventil nach Anspruch 16, 17 oder 18, **dadurch gekennzeichnet, daß** in der Ventilöffnung (17) sich axial erstreckende Kraftstoffdurchflußbereiche (52) zwischen Führungsstegen (51) für die Ventilnadel (18) vorgesehen sind, denen jeweils ein Teil der Kraftstoffkanäle (29") zugeordnet ist.

20. Einspritzventil nach einem der vorhergehenden Ansprüche, **dadurch gekennzeichnet, daß** an der Ventilnadel (18) ein Anschlagmittel (31, 36) vorgesehen ist, das mit einem der Ventilöffnung (17) zugeordneten Gegenanschlag (15, 47) zusammenwirkt, um eine Bewegung der Ventilnadel (18) in Abspritzrichtung zu begrenzen, wobei der Abstand zwischen dem Anschlagmittel (31, 36) und dem Gegenanschlag (15, 47) bei geschlossenem Ventil größer ist als der Öffnungshub der Ventilnadel (18).

21. Einspritzventil nach Anspruch 20, **dadurch gekennzeichnet, daß** das Anschlagmittel (31, 36) in einer an der Ventilnadel (18) vorgesehenen Nut (32, 32') festgelegt ist.

22. Einspritzventil nach Anspruch 20 oder 21, **dadurch gekennzeichnet, daß** als Anschlagmittel ein Sicherungsring (31) vorgesehen ist.

23. Einspritzventil nach Anspruch 22, **dadurch gekennzeichnet, daß** der Sicherungsring (31) aus einem Polymerwerkstoff hergestellt ist.

24. Einspritzventil nach Anspruch 20 oder 21, **dadurch gekennzeichnet, daß** als Anschlagmittel ein Sicherungsrohr (36) vorgesehen ist.

## Claims

1. Injection valve, in particular for the direct injection of fuel into a combustion chamber of an internal combustion engine, having a valve body (13) which has, in order to form an injection opening (30), a valve opening (17) surrounded by a valve seat (16), and having a valve needle (18) which is prestressed into its closed position, has a closing head (19) and extends through the valve opening (17) in such a manner that, when the valve is closed, the closing head (19), which interacts with the valve seat (16), bears against the valve seat (16) on the injection side, having a multiplicity of circumferentially distributed fuel ducts (29, 29', 43) arranged in the flow path upstream of the injection opening (30) which are designed in such a manner that the individual cross sections of the fuel ducts (29, 29', 43) together define a cross section of the flow path through the valve, which cross section determines the flow rate, and the fuel jets or streams emerging from them are essentially maintained until downstream of the injection opening (30), **characterized in that** the fuel ducts (29, 29', 43) are formed directly in the valve body (13) upstream of the valve seat (16).

2. Injection valve according to Claim 1, **characterized in that** the fuel ducts (29, 29', 43) open into an annular space (28, 45) which surrounds the valve needle (18) and is provided in the valve opening (17) upstream of the injection opening (30).

3. Injection valve according to Claim 1 or 2, **characterized in that** the fuel ducts (29, 29', 43) are formed in a guide section (25) guiding the valve needle (18) in the region of its closing head (19).

4. Injection valve according to one of the preceding claims, **characterized in that** the fuel ducts (29) are designed as holes.

5. Injection valve according to one of Claims 1 to 3, **characterized in that** the fuel ducts (29', 43) are designed as grooves in the wall of an opening (17) guiding the valve needle (18).

6. Injection valve according to Claim 5, **characterized in that** the fuel ducts (29') which are designed as grooves have on the outlet side oblique surfaces (70) which, together with an edge (71) provided on the valve needle (18), define the cross section of the flow path through the valve, which cross section determines the flow rate.

7. Injection valve according to Claim 6, **characterized in that** the opening (17) guiding the valve needle (18) has on the inlet side a conical section (17') which, together with the valve needle axis, encloses essentially the same angle as the oblique surfaces (70) of the fuel ducts (29').

8. Injection valve according to one of Claims 2 to 7, **characterized in that** the diameter of the valve opening (17) in the region directly upstream of the valve seat (16) corresponds to the guiding diameter for the valve needle (18), and **in that** the valve needle (18) has, adjacent to the closing head (19), an encircling groove (27) bounding the annular space (28) on the inside.

9. Injection valve according to Claim 8, **characterized in that** an encircling groove (26) which bounds the annular space (28) on the outside is arranged in the wall of the valve opening (17) in such a manner that the valve opening (17) has a collar (35) between the groove (26) and the valve seat (16).

10. Injection valve, in particular for the direct injection of fuel into a combustion chamber of an internal combustion engine, having a valve body (13) which has, in order to form an injection opening (30), a valve opening (17) surrounded by a valve seat (16), and having a valve needle (18) which is prestressed into its closed position, has a closing head (19) and extends through the valve opening (17) in such a manner that, when the valve is closed, the closing head (19), which interacts with the valve seat (16), bears against the valve seat (16) on the injection side, having a multiplicity of circumferentially distributed fuel ducts (29, 29', 29'') arranged in the flow path upstream of the injection opening (30) which are designed in such a manner that the individual cross sections of the fuel ducts (29, 29', 29'') together define a cross section of the flow path through the valve, which cross section determines the flow rate, and the fuel jets or streams emerging from them are essentially maintained until downstream of the injection opening (30), the fuel ducts (29, 29', 29'') being formed upstream of the valve seat (16) and independently of the valve body (13) in an additional component (53, 60), **characterized in that** the component (53, 60) having the fuel ducts (29, 29', 29'') is connected fixedly to the valve body (13).

11. Injection valve according to Claim 10, **characterized in that** the fuel ducts (29, 29', 29'') open into an annular space (28, 45) which surrounds the valve needle (18) and is provided in the valve opening (17) upstream of the injection opening (30).

12. Injection valve according to Claim 10 or 11, **characterized in that** the additional component is a conical guide body (60) which is inserted, as a guide part for the valve needle (18), into the valve opening (17) which has a conical section.

13. Injection valve according to one of Claims 10 to 12, **characterized in that** the fuel ducts (29, 29") are designed as holes.

14. Injection valve according to one of Claims 10 to 12, **characterized in that** the fuel ducts (29', 43) are designed as grooves in the wall of an opening (17, 62) guiding the valve needle (18).

15. Injection valve according to Claim 12, **characterized in that** the fuel ducts (29') are designed as grooves (69) in a conical outer circumferential surface (66) of the guide body (60).

16. Injection valve according to Claim 10 or 11, **characterized in that** the inlet region of the valve opening (17) is assigned a metering washer (53, 53') which contains the fuel ducts (29") and has a central opening (54) for the valve needle (18).

17. Injection valve according to Claim 16, **characterized in that** the fuel ducts (29'') are formed by metering openings (55) in the metering washer (53).

18. Injection valve according to Claim 16, **characterized in that** the fuel ducts (29'') are formed by recesses (58) in the edge of the central opening (54) of the metering washer (53').

19. Injection valve according to Claim 16, 17 or 18, **characterized in that** in the valve opening (17) fuel-flow regions (52) extending axially are provided between guide webs (51) for the valve needle (18), the said fuel-flow regions in each case being assigned some of the fuel ducts (29'').

20. Injection valve according to one of the preceding claims, **characterized in that** a stop means (31, 36) is provided on the valve needle (18) and interacts with a counter stop (15, 47) assigned to the valve opening (17), in order to limit a movement of the valve needle (18) in the injection direction, the distance between the stop means (31, 36) and the counter stop (15, 47) when the valve is closed being greater than the opening stroke of the valve needle (18).

21. Injection valve according to Claim 20, **characterized in that** the stop means (31, 36) is fixed in a groove (32, 32') provided on the valve needle (18).

22. Injection valve according to Claim 20 or 21, **characterized in that** a securing ring (31) is provided as the stop means.

23. Injection valve according to Claim 22, **characterized in that** the securing ring (31) is produced from a polymer material.

24. Injection valve according to Claim 20 or 21, **characterized in that** a securing tube (36) is provided as the stop means.

## Revendications

1. Injecteur notamment pour l'injection directe de carburant dans la chambre de combustion d'un moteur à combustion interne comprenant :
- un corps d'injecteur (13) comportant un orifice (17) entouré par un siège de soupape (16) pour former un orifice d'éjection (30) et
- une aiguille d'injecteur (18) ayant une tête d'obturation (17), cette aiguille précontrainte en position de fermeture s'étend à travers l'orifice de l'injecteur (17) pour que la tête d'obturation (19), coopérant avec le siège de soupape (16), s'applique contre celui-ci, du côté de l'éjection, lorsque l'injecteur est fermé,
- un certain nombre de canaux à carburant (29, 29', 43) répartis de manière périphérique dans le chemin de passage en amont de l'orifice d'éjection (30), ces canaux de carburant (29, 29', 43) étant tels que leur section fixe globalement la section du chemin de passage définissant le débit à travers l'injecteur et les jets ou les filets, sortant de ces canaux, restent conservés jusque derrière l'orifice d'éjection (30),
**caractérisé en ce que**
les canaux à carburant (29, 29', 43) sont directement réalisés dans le corps de soupape (13) en amont du siège de soupape (16).

2. Injecteur selon la revendication 1,
**caractérisé en ce que**
les canaux à carburant (29, 29', 43) débouchent dans un volume annulaire (28, 45) entourant l'aiguille (18), ce canal annulaire se trouvant devant l'orifice d'éjection (30) dans l'orifice de l'injecteur (17).

3. Injecteur selon l'une quelconque des revendications 1 ou 2,
**caractérisé en ce que**
les canaux à carburant (29, 29', 43) sont réalisés dans un segment de guidage (25) pour l'aiguille (18) au niveau de sa tête d'obturation (19).

4. Injecteur selon l'une quelconque des revendications précédentes,
**caractérisé en ce que**
les canaux à carburant (29) sont réalisés sous la forme de perçages.

5. Injecteur selon l'une quelconque des revendications 1 à 3,
**caractérisé en ce que**
les canaux à carburant (29', 43) sont des rainures dans la paroi d'un orifice (17) guidant l'aiguille (18).

6. Injecteur selon la revendication 5,
**caractérisé en ce que**
les canaux à carburant (29'), réalisés sous la forme de rainures, comportent en sortie des surfaces inclinées (70) fixant avec une arête (71) prévue sur l'aiguille (18), la section du chemin de passage à travers l'injecteur définissant le débit.

7. Injecteur selon la revendication 6,
**caractérisé en ce que**
l'orifice (17) guidant l'aiguille (18) comporte, du côté de l'entrée, un segment conique (17') faisant avec l'axe de l'aiguille, pratiquement le même angle que la surface inclinée (70) des canaux à carburant (29').

8. Injecteur selon l'une quelconque des revendications 2 à 7,
**caractérisé en ce que**
le diamètre de l'orifice (17), dans la zone directement devant le siège (16) correspond au diamètre de guidage de l'aiguille (18) et l'aiguille (18) présente, au voisinage de la tête d'obturation (19), une rainure périphérique (27) délimitant intérieurement le volume annulaire (28).

9. Injecteur selon la revendication 8,
**caractérisé en ce que**
la paroi de l'orifice (17) comporte une rainure périphérique (26) délimitant extérieurement le volume annulaire (28), cette rainure étant disposée pour que l'orifice (17) présente une collerette (35) entre la rainure (26) et le siège de soupape (16).

10. Injecteur, notamment pour l'injection directe de carburant dans une chambre de combustion d'un moteur à combustion interne, comprenant :
- un corps d'injecteur (13) muni d'un orifice (17) entouré d'un siège de soupape (16) pour former un orifice d'éjection (30),
- une aiguille d'injecteur (18) ayant une tête d'obturation (19), précontrainte dans sa position de fermeture, cette aiguille traversant l'orifice (17) de façon que la tête d'obturation (19), qui coopère avec le siège (16), soit appliquée contre le siège de soupape (16) du côté de l'éjection lorsque l'injecteur est fermé,
- un grand nombre de canaux à carburant (29, 29', 29") répartis de manière périphérique dans le chemin de circulation devant l'orifice d'éjection (30), ces canaux, réalisés pour leurs différentes sections, donnent globalement une section de chemin de passage définissant le débit à travers l'injecteur et les jets ou filets de carburant sortant des canaux restent pratiquement conservés jusque derrière l'orifice d'éjection (30), les canaux à carburant (29, 29', 29") étant réalisés dans la partie en amont du siège d'injecteur (16) dans une pièce (53, 60) supplémentaire, indépendante du corps d'injecteur (13),
**caractérisé en ce que**
la pièce (53, 60) munie des canaux à carburant (29, 29', 29") est reliée solidairement au corps d'injecteur (13).

11. Injecteur selon la revendication 10,
**caractérisé en ce que**
les canaux à carburant (29, 29', 29") débouchent dans une chambre annulaire (28, 45) entourant l'aiguille (18), cette chambre étant prévue devant l'orifice d'éjection (30) dans l'orifice (17) de l'injecteur.

12. Injecteur selon l'une quelconque des revendications 10 ou 11,
**caractérisé en ce que**
la pièce supplémentaire est un organe de guidage (60) conique, servant de pièce de guidage de l'aiguille (18) par un orifice (17) ayant un segment conique.

13. Injecteur selon l'une quelconque des revendications 10 à 12,
**caractérisé en ce que**
les canaux à carburant (29, 29") sont des perçages.

14. Injecteur selon l'une quelconque des revendications 10 à 12,
**caractérisé en ce que**
les canaux à carburant (29',43) sont des rainures réalisées dans la paroi d'une ouverture (17, 62) guidant l'aiguille (18).

15. Injecteur selon la revendication 12,
**caractérisé en ce que**
les canaux à carburant (29') sont réalisés sous la forme de rainures (69) dans une surface périphérique extérieure (66) conique de l'organe de guidage (60).

16. Injecteur selon l'une quelconque des revendications 10 ou 11,
**caractérisé en ce qu'**
un disque de dosage (53, 53') muni des canaux à carburant (29") est associé à la zone d'entrée de l'orifice (17), ce disque ayant un orifice central (54) pour l'aiguille (18).

17. Injecteur selon la revendication 16,
**caractérisé en ce que**
les canaux à carburant (29") sont formés dans le disque de dosage (53) par des orifices de dosage (55).

18. Injecteur selon la revendication 16,
**caractérisé en ce que**
les canaux à carburant (29") sont formés par des cavités (58) du bord de l'orifice central (54) du disque de dosage (53').

19. Injecteur selon l'une quelconque des revendications 16, 17, 18,
**caractérisé en ce que**
l'orifice (17) comporte des zones de passage de carburant (52) s'étendant axialement, entre des nervures de guidage (51) de l'aiguille (18) auquel est associée chaque fois une partie des canaux de carburant (29").

20. Injecteur selon l'une quelconque des revendications précédentes,
**caractérisé en ce que**
l'aiguille (18) comporte un moyen de butée (31, 36) qui coopère avec une contrebutée (15, 47) associée à l'orifice (17) pour limiter le mouvement de l'aiguille (18) dans le sens de l'éjection, la distance entre le moyen de butée (31, 36) et la butée opposée (15, 47) étant plus grande lorsque l'injecteur est fermé que la course d'ouverture de l'aiguille (18).

21. Injecteur selon la revendication 20,
**caractérisé en ce que**
le moyen de butée (31, 36) est fixé dans une rainure (32, 32') prévue sur l'aiguille (18).

22. Injecteur selon la revendication 20 ou 21,
**caractérisé en ce que**
le moyen de butée est une bague de blocage (31).

23. Injecteur selon la revendication 22,
**caractérisé en ce que**
la bague de fixation (31) est en un polymère.

24. Injecteur selon l'une quelconque des revendications 20 ou 21,
**caractérisé en ce que**
le moyen de butée est un tube de fixation (36).
